# EUROPEAN PATENT APPLICATION

(11) **EP 1 637 849 A2**
(43) Date of publication of application: **22.03.2006**
(21) Application number: 05076935.5
(22) Date of filing: 23.08.2005
(51) Int. Cl.: G01F 23/36

(54) **Sealed fuel level sensor**

(30) Priority: 30.08.2004 US 929181
(71) Applicant: Delphi Technologies, Inc., Troy, MI 48007 (US)
(72) Inventor: Ireland, Hugh W., Flushing, MI 48433 (US); Sawert, Ulf, Grand Blanc, MI 48439 (US)
(74) Representative: Denton, Michael John

(57) **Abstract**

A sealed fuel level sensor (10) for a fuel tank (12) includes a frame (28) having a cavity (36) therein and a variable resistor (48) disposed in the cavity (36) and operatively supported by the frame (28). The sealed fuel level sensor (10) also includes a wiper (94) disposed in the cavity (36) for rotation relative to the variable resistor (48) and for contacting the variable resistor (48). The sealed fuel level sensor (10) includes a cover (56) connected to the frame (28) to enclose the cavity (36) and a float arm (82) extending through the cover (56) and connected to the wiper (94). The sealed fuel level sensor (10) further includes a float (84) connected to the float arm (82) such that the float (84) moves the float arm (82) and the wiper (94) relative to the variable resistor (48) as a level of fuel increases and decreases in the fuel tank (12).

## Description

### TECHNICAL FIELD

The present invention relates generally to fuel sensors for vehicles and, more particularly, to a sealed fuel level sensor for a vehicle.

### BACKGROUND OF THE INVENTION

It is known to provide a fuel level sensor in a fuel tank of a vehicle to sense or indicate a level of fuel in the fuel tank. Examples of such fuel level sensors are disclosed in U.S. Patent No. 5,746,088 and U.S. Patent No. 6,021,668. Typically, the fuel level sensor includes a ceramic resistor card operatively connected to structure for a fuel module and a wiper assembly pivotally connected to the structure for engaging the resistor card. The wiper assembly has one end connected to a float arm and float to rotate the wiper assembly relative to the resistor card based on a level of fuel in the fuel tank.

Currently, thick film ceramic fuel level sensors have been open and exposed to fuel in the fuel tank. These fuel level sensors typically employ silver (Ag) based conductive inks (Ag, Pd, Pt) and high content Ag contacts (Paliney6, Ag/Ni). These materials function properly in fuels that contain moderate sulfur levels or that are low in alcohol content. These materials have also allowed manufacturers to produce a cost effective fuel level sensor.

Fuel level sensors that are open and exposed to fuels have always been susceptible to solid contaminates, for example sand, which can cause the sensor output to produce opens. As sulfur levels in fuels are reduced, what remains are smaller, more reactive compounds. Sulfination is a chemical reaction between Ag and sulfur. Natural aging of the ink/contact interfaces of the fuel level sensor exposes the silver in these components to sulfurs, producing a thin lacquer contamination. Silver based fuel level sensors produce opens or a shift in resistance when exposed to this extremely reactive fuel.

Also, as refineries introduce fuels with higher levels of alcohol, silver based fuel level sensors that are open or exposed to this fuel are more susceptible to plating, galvanic, or dendritic growth. Galvanic growth is a plating process which forms an insulating layer between the contacts and a working surface of the conductive ink, no matter if the materials are Ag based or Noble metals. Given enough powered exposure time, the output of the fuel level sensor will produce an open. Dendritic growth is a silver migration that will short out segments of the resistor of the fuel level sensor.

Therefore, it is desirable to provide a fuel level sensor that does not expose inks or contacts to the fuel. It is also desirable to provide a fuel level sensor that has the ability to use lower cost Ag based materials. Thus, there is a need in the art to provide a fuel level sensor that meets these desires.

### SUMMARY OF THE INVENTION

Accordingly, the present invention is a sealed fuel level sensor for a fuel tank including a frame having a cavity therein and a variable resistor disposed in the cavity and operatively supported by the frame. The sealed fuel level sensor also includes a wiper disposed in the cavity for rotation relative to the variable resistor and for contacting the variable resistor. The sealed fuel level sensor includes a cover connected to the frame to enclose the cavity and a float arm extending through the cover and connected to the wiper. The sealed fuel level sensor further includes a float connected to the float arm such that the float moves the float arm and the wiper relative to the variable resistor as a level of fuel increases and decreases in the fuel tank.

One advantage of the present invention is that a sealed fuel level sensor is provided for a fuel tank of a vehicle. Another advantage of the present invention is that the sealed fuel level sensor encloses a wiper and sensor card via a cover and seal at a frame interface. Yet another advantage of the present invention is that the sealed fuel level sensor has the ability to use lower cost Ag based materials as compared to less reactive materials like Gold (Au). Still another advantage of the present invention is that the sealed fuel level sensor can function in a dry environment, either minimizing or preventing exposure of the inks or contacts to fuel.

Other features and advantages of the present invention will be readily appreciated, as the same becomes better understood, after reading the subsequent description taken in conjunction with the accompanying drawings.

### BRIEF DESCRIPTION OF THE DRAWINGS

Figure 1 is a fragmentary elevational view of a sealed fuel level sensor, according to the present invention, illustrated in operational relationship with a fuel tank.
Figure 2 is an enlarged elevational view of the sealed fuel level sensor of Figure 1.
Figure 3 is a sectional view taken along line 3-3 of Figure 2.
Figure 4 is a perspective view of the sealed fuel level sensor of Figure 1.

### DESCRIPTION OF THE PREFERRED EMBODIMENTS

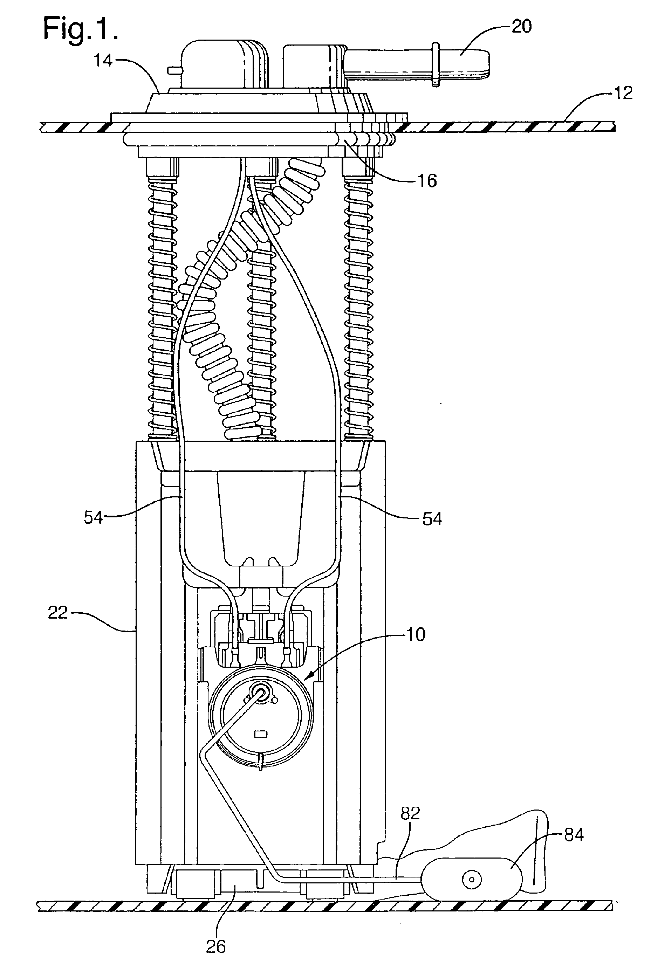

Referring to the drawings and in particular Figure 1, one embodiment of a sealed fuel level sensor 10, according to the present invention, is shown for a fuel tank 12 (partially shown) of a vehicle (not shown). The fuel tank 12 includes a fuel pump module 14 therein with a removable cover 16 sealed to the top of the fuel tank 12 with an electrical connector 18 and a fuel line outlet connector 20. The fuel tank 12 also includes a fuel reservoir 22 that contains an electrical fuel pump 24 with an inlet 26 and the sealed fuel level sensor 10 to indicate fuel level in the fuel tank 12. It should be appreciated that, except for the sealed fuel level sensor 10, the fuel tank 12 and fuel pump module 14 are conventional and known in the art.

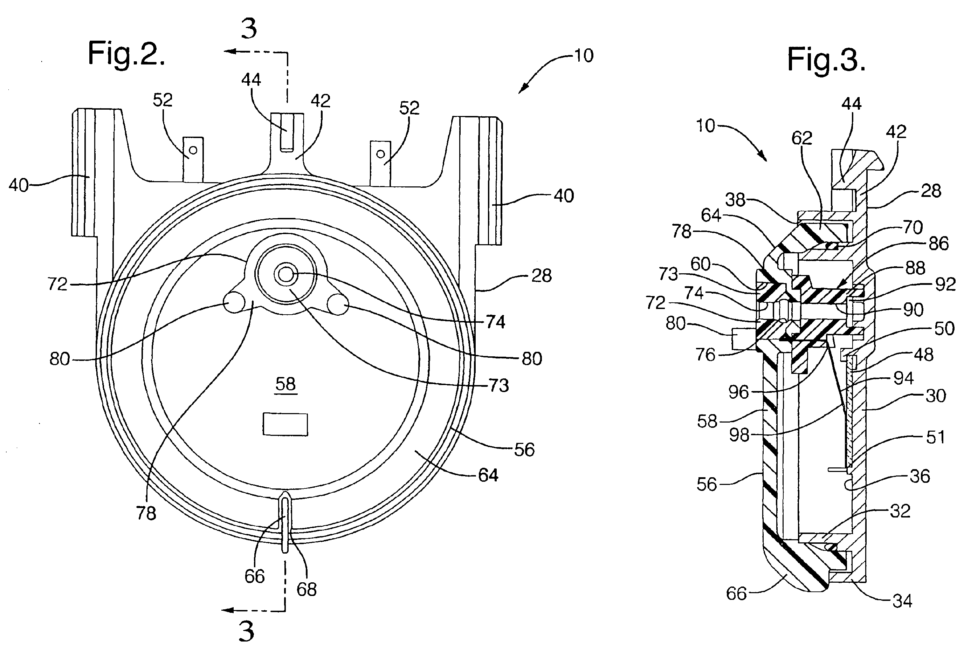

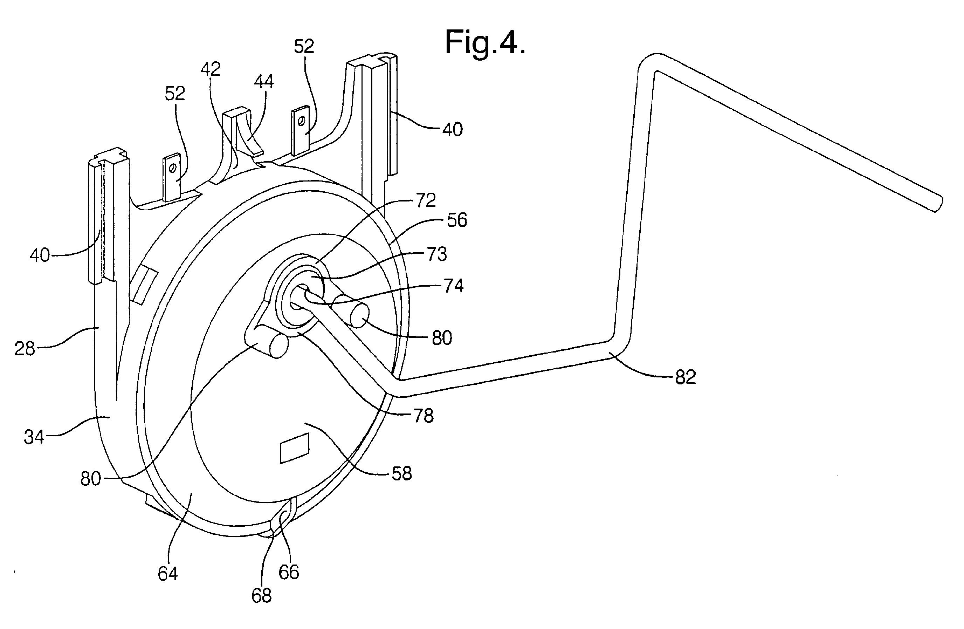

Referring to Figures 2 through 4, the sealed fuel level sensor 10 includes a frame 28 for connection to the fuel reservoir 22. The frame 28 has a base wall 30 and at least one, preferably a plurality of side walls 32 and 34 generally perpendicular to the base wall 30. The first side wall 32 is generally annular and circular in shape to form a cavity 36 to support a variable resistor 48 to be described. The cavity 36 has a generally circular shape. The second side wall 34 is generally annular and circular in shape and spaced radially from the first side wall 32 to form a channel or groove 38 therebetween. The frame 28 also has a pair of arms 40 spaced laterally and extending longitudinally from the base wall 30. The frame 28 also has an extension 42 spaced laterally between the arms 40 and extending longitudinally. The extension 42 has a flange 44 extending axially from a free end thereof. The arms 40 and flange 44 extend through apertures (not shown) in the fuel reservoir 22 and the flange 44 prevents removal of the frame 28 from the aperture to suspend the frame 28 from the fuel reservoir 22. The frame 28 is made of a plastic material and formed as a monolithic structure being integral, unitary and one-piece.

The sealed fuel level sensor 10 also includes a variable resistor comprising a ceramic resistor card 48 operatively connected to the frame 28. The ceramic resistor card 48 has at least one bus portion (not shown), preferably a resistive bus portion (not shown) and a conductive bus portion (not shown) spaced from the resistive bus portion. The ceramic resistor card 48 also has a solder pad (not shown) at one end of the resistive bus portion and a solder pad (not shown) at one end of the conductive bus portion. The resistive bus portion extends over a predetermined angle, for example approximately sixty-five degrees (65°), to provide a variable resistance corresponding to the fuel level in the fuel tank 12. It should be appreciated that the conductive bus portion is a common ground. It should also be appreciated that the solder pads provide connection points to be described.

The ceramic resistor card 48 is generally planar and rectangular in shape. The ceramic resistor card 48 is made of a ceramic material. The bus portions and solder pads are made of a conductive ink where contacts to be described ride on and are formed in generally arcuate pathways. The conductive ink is made of an alloy of silver (Ag). It should be appreciated that the conductive ink is known in the art.

The ceramic resistor card 48 is disposed in the cavity 34 of the frame 28 and abuts the base wall 30. The ceramic resistor card 48 is secured in place by a hold down projection 50 extending from the base wall 30 and into the cavity 34. The projection 50 has a generally inverted "L" cross-sectional shape and the ceramic resistor card 48 is disposed between the projection 50 and the base wall 30. It should be appreciated that the ceramic resistor card 48 is also secured by a suitable mechanism such as soldering at 51.

The sealed fuel level sensor 10 includes at least one, preferably a plurality of terminals 52 operatively supported by the frame 28. The terminals 52 are made of a conductive material. The terminals 52 are generally rectangular in shape. The terminals 52 are insert molded to the frame 28 and extend longitudinally from one end of the frame 28. The terminals 52 are electrically connected to the solder pads of the ceramic resistor card 48. It should be appreciated that the terminals 52 are connected by wires 54 (Figure 1) to the electrical connector 18.

The sealed fuel level sensor 10 includes a cover 56 to enclose the cavity 36 of the frame 28. The cover 56 has a base wall 58 extends radially and has a generally circular shape. The base wall 58 also includes an aperture 60 extending axially therethrough and communicating with the cavity 36. The cover 56 includes a side wall 62 being generally annular and extending generally perpendicular from the base wall 58. The side wall 62 is disposed in the groove 38 of the frame 28 and secured thereto by a suitable mechanism such as press-fitting. The side wall 62 may include a chamfer 64 on an outer portion thereof. The side wall 62 may also include a projection 66 extending radially and axially. The projection 66 is disposed in a slot 68 of the second side wall 34 of the frame 28 to locate the cover 56 relative to the frame 28. The cover 56 is made of a plastic material and formed as a monolithic structure being integral, unitary and one-piece. It should be appreciated that, in another embodiment, the cover 56 may allow a limited amount of fuel to enter the cavity 36.

The sealed fuel level sensor 10 includes a seal 70 disposed between the cover 56 and the frame 28. The seal 70 is generally annular and circular in cross-sectional shape. The seal 70 is of an o-ring type and made of an elastomeric material. The seal 70 is disposed in the groove 38 of the frame 28 between the side wall 62 of the cover 56 and the first side wall 32 of the frame 28.

The sealed fuel level sensor 10 also includes a bushing 72 disposed in the aperture 62 of the base portion 58. The bushing 72 has a shaft portion 73 extending axially. The shaft portion 73 is generally cylindrical in shape and has an aperture 74 extending axially therethrough. The aperture 74 has a groove 76 extending circumferentially about one end to receive a retainer (not shown) to prevent a float arm 82 to be described from exiting the aperture 74 of the bushing 72. The bushing 72 includes a lip seal portion 78 extending outwardly from the shaft portion 73. The lip seal portion 78 is generally planar in shape and extends outwardly past the aperture 62 of the cover 56. The lip seal portion 78 includes a pair of posts 80 extending axially and spaced radially to limit movement of the float arm 82. The bushing 72 is made of a conductive metal such as brass. The bushing 72 is formed as a monolithic structure being integral, unitary, and one-piece. It should be appreciated that the one-piece lip seal and bushing allows for ease of assembly. It should also be appreciated that the bushing 72 forms a seal around the float arm 82 while still allowing a wiper to be described to move freely in a dry environment.

The sealed fuel level sensor 10 includes a float arm 82 connected to the bushing 72. The float arm 82 is made of a metal material, preferably a plated cold rolled steel. The float arm 82 is a rod that is bent with one end disposed in a cavity (not shown) of a float 84 and another end disposed in the aperture 74 of the bushing 72. The sealed fuel level sensor 10 includes a float 84 (Figure 1) connected to the float arm 82. The float 84 is generally rectangular in shape and has a cavity (not shown) in one end to receive one end of the float arm 82. The float 84 is made of a floatable material having a density less than a density of the fuel. It should be appreciated that the float arm 82 is inserted through the bushing 72 and is press fit into a wiper assembly to be described, allowing for the rotation and function of the contacts on the conductive ink of the ceramic resistor card 48.

Referring to Figure 3, the sealed fuel level sensor 10 includes a wiper assembly, generally indicated at 86, for cooperating with the ceramic resistor card 48 to provide a signal as to a level of fuel in the fuel tank 12. The wiper assembly 86 includes a shaft 88 disposed in the cavity 36 of the frame 28. The shaft 88 is generally cylindrical in shape. The shaft 88 has an aperture 90 extending axially therethrough. The aperture 90 has a groove 92 extending circumferentially about one end to receive a retainer (not shown) to prevent the float arm 82 from exiting the aperture 90 of the shaft 88.

The wiper assembly 86 includes a wiper 94 connected to the shaft 88 for contacting the ceramic resistor card 48. The wiper 94 has a base 96 that is generally arcuate in shape and connected to the shaft 88. The wiper 94 also has at least one, preferably a plurality of contact flex arms 98 formed by slots (not shown) spaced laterally and extending longitudinally therein. The contact flex arms 98 extend longitudinally and downward at an angle from the base 96. The contact flex arms 98 and base 96 are formed from a non-Noble metal such as copper. The contact flex arms 98 and base 96 are integral, unitary and formed as one-piece. The wiper 94 is preferably insert molded into the shaft 88 to retain the wiper 94 thereto. The wiper 94 also includes at least one, preferably a plurality of or multiple contacts (not shown) near a free end of each contact flex arm 98. It should be appreciated that the wiper 94 is operatively supported by the shaft 88. It should also be appreciated that the contact flex arms 100 flex or deflect relative to the base 98.

In operation, the sealed fuel level sensor 10 is operatively connected to the fuel reservoir 22 of the fuel pump module 14 inside the fuel tank 12. Fuel inside the fuel tank 12 causes the float 84 to rise to the top thereof. The wiper 94 engages the bus portions of the ceramic resistor card 48. The contacts engage the bus portions and the contact flex arms 98 create a shorting bar between resistive and conductive paths on the ceramic resistor card 48 to provide a predetermined resistance when an electrical signal is sent by a controller (not shown) via the electrical connector 18 to indicate the level of fuel in the fuel tank 12. As the fuel level increases or decreases in the fuel tank 12, the float 84 is raised or lowered to rotate the wiper assembly 86 relative to the frame 28 via the float arm 82. As the wiper assembly 86 rotates, the wiper 94 rotates across the bus portions and the contacts move to different portions thereof to vary or provide a different predetermined resistance to indicate the level of fuel in the fuel tank 12. It should be appreciated that the wiper 94 has the ability to function in a five-volt (5v), ten milliamp (10mA) system.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

**1.** A sealed fuel level sensor (10) for a fuel tank (12) comprising:
a frame (28) having a cavity (36) therein;
a variable resistor (48) disposed in said cavity (36) and operatively supported by said frame (28);
a wiper (94) disposed in said cavity (36) for rotation relative to said variable resistor (48) and for contacting said variable resistor (48);
a cover (56) connected to said frame (28) to enclose said cavity (36);
a float arm (82) extending through said cover (56) and connected to said wiper (94); and
a float (84) connected to said float arm (82) such that said float (84) moves said float arm (82) and said wiper (94) relative to said variable resistor (48) as a level of fuel increases and decreases in the fuel tank (12).

**2.** A sealed fuel level sensor (10) as set forth in claim 1 wherein said wiper (94) includes a shaft (88) disposed in said cavity (36) and having an aperture (60) extending therethrough to receive one end of said float arm (82).

**3.** A sealed fuel level sensor (10) as set forth in claim 1 wherein said wiper (94) has a base portion (96) connected to said shaft (88) and at least one flex arm (98) extending from said base portion (96) toward said variable resistor (48).

**4.** A sealed fuel level sensor (10) as set forth in claim 1 wherein said cover (56) includes a base wall (58) and a side wall (62) extending outwardly from said base wall (58).

**5.** A sealed fuel level sensor (10) as set forth in claim 4 wherein said frame (28) has a groove (38) therein to receive said side wall (62).

**6.** A sealed fuel level sensor (10) as set forth in claim 4 wherein said base wall (58) includes an aperture (60) extending therethrough.

**7.** A sealed fuel level sensor (10) as set forth in claim 6 including a bushing (72) disposed in said aperture (60).

**8.** A sealed fuel level sensor (10) as set forth in claim 7 wherein said bushing (72) has a shaft portion (73) having an aperture (74) extending therethrough to receive one end of said float arm (82).

**9.** A sealed fuel level sensor (10) as set forth in claim 7 wherein said bushing (72) has a lip seal portion (78) extending outwardly from said shaft portion (73) and overlapping said aperture (60) of said cover (56).

**10.** A sealed fuel level sensor (10) as set forth in claim 9 wherein said lip seal portion (78) has a pair of posts (80) extending outwardly and spaced radially to limit movement of said float arm (82).

**11.** A sealed fuel level sensor (10) as set forth in claim 9 wherein said bushing (72) is a monolithic structure being integral, unitary, and one-piece.

**12.** A sealed fuel level sensor (10) as set forth in claim 1 including a seal (70) disposed between said cover (56) and said frame (28) to prevent fuel from entering said cavity (36).

**13.** A sealed fuel level sensor (10) as set forth in claim 1 including at least one terminal (52) molded to said frame (28) and electrically connected to said variable resistor (48).

**14.** A sealed fuel level sensor (10) comprising:
a frame (28) having a base wall (58) and a plurality of said walls (32,34) to form a cavity (36) therein and a groove (38) spaced from and disposed about said cavity (36);
a variable resistor (48) disposed in said cavity (36) and operatively supported by said frame (28);
a wiper (94) disposed in said cavity (36) for rotation relative to said variable resistor (48) and for contacting said variable resistor (48);
a cover (56) having a base wall (58) with an aperture (60) extending therethrough to enclose said cavity (36) and a side wall (62) disposed in said groove (38) for connection to said frame (28);
a bushing (72) disposed in said aperture (60);
a float arm (82) extending through said bushing (72) and operatively connected to said wiper (94); and
a float (84) connected to said float arm (82) such that said float (84) moves said float arm (82) and said wiper (94) relative to said variable resistor (48) as a level of fuel increases and decreases in the fuel tank (12).

**14.** A sealed fuel level sensor (10) as set forth in claim 13 wherein said bushing (72) has a shaft portion (73) having an aperture (74) extending therethrough to receive one end of said float arm (82).

**15.** A sealed fuel level sensor (10) as set forth in claim 14 wherein said bushing (72) has a lip seal portion (78) extending outwardly from said shaft portion (73) and overlapping said aperture (60) of said cover (56).

**16.** A sealed fuel level sensor (10) as set forth in claim 15 wherein said lip seal portion (78) has a pair of posts (80) extending outwardly and spaced radially to limit movement of said float arm (82).

**17.** A sealed fuel level sensor (10) as set forth in claim 15 wherein said bushing (72) is a monolithic structure being integral, unitary, and one-piece.

**18.** A sealed fuel level sensor (10) as set forth in claim 13 including a seal (70) disposed between said cover (56) and said frame (28) to prevent fuel from entering said cavity (36).

**19.** A sealed fuel level sensor (10) as set forth in claim 13 including at least one terminal (52) molded to said frame (28) and electrically connected to said variable resistor (48).

**20.** A sealed fuel level sensor (10) comprising:
a frame (28) having a cavity (36) therein;
a variable resistor (48) disposed in said cavity (36) and operatively supported by said frame (28);
a wiper assembly (86) disposed in said cavity (36) for rotation relative to said variable resistor (48);
a cover (56) connected to said frame (28) to enclose said cavity (36);
a float arm (82) extending through said cover (56) and connected to said wiper assembly (86); and
a float (84) connected to said float arm (82) such that said float (84) moves said float arm (82) and said wiper assembly (86) relative to said variable resistor (48) as a level of fuel increases and decreases in the fuel tank (12).
